# EUROPEAN PATENT SPECIFICATION

(11) **EP 4 405 240 B1**
(45) Date of publication and mention of the grant of the patent: **05.11.2025**
(21) Application number: 22765952.1
(22) Date of filing: 25.08.2022
(51) Int. Cl.: B62K 15/00, B62M 6/55

(54) **FOLDING BICYCLE, IN PARTICULAR BICYCLE WITH PEDAL ASSISTANCE**
KLAPPFAHRRAD, INSBESONDERE FAHRRAD MIT PEDALUNTERSTÜTZUNG
BICYCLETTE PLIABLE, EN PARTICULIER BICYCLETTE À ASSISTANCE DE PÉDALE

(30) Priority: 21.09.2021 IT 202100024200
(43) Date of publication of application: 31.07.2024
(73) Proprietor: Mov.Eng S.r.l., 10128 Torino (TO) (IT)
(72) Inventor: PICCINI, Piero, 10128 Torino (TO) (IT)
(74) Representative: Buzzi, Notaro & Antonielli d'Oulx S.p.A.
(86) International application number: PCT/IB2022/057957
(87) International publication number: WO 2023/047209

(56) References cited:
- CN-U- 204 355 227
- US-A- 4 433 852
- US-A1- 2017 247 076

## Description

### TEXT OF THE DESCRIPTION

### Field of the invention

The present invention relates to a folding bicycle. The invention is aimed in particular at a folding bicycle of the type with pedal assistance obtained with an electric motor, even though application to conventional bicycles is not excluded.

### Prior art

There have been known and used for some time now folding bicycles of the type comprising:
- a frame, including a main diagonal element having a front end that carries a head tube and a rear end that carries a crank-axle unit of the bicycle,
- a rear wheel rotatably mounted on a rear-wheel support connected to said frame, said rear wheel having a hub that carries a sprocket wheel connected by means of a chain drive or a belt drive to a chainwheel of said crank-axle unit, and
- a front wheel rotatably mounted on a front-wheel support connected to a steering tube that is rotatably mounted within said head tube,
- wherein said frame has at least one first, substantially vertical, folding axis that enables the rear wheel to be moved, together with the rear-wheel support and the crank-axle unit, via a rotation of approximately 180°, from a position of normal use to a folded position in which the rear wheel is substantially arranged alongside the front wheel.

Documents CN 204355227, US4433852 and US 2017/247076 disclose different solutions in this respect, CN 204355227 for example discloses that the second folding axis is oriented in a direction transverse to the general plane of the bicycle.

Bicycles of the type referred to above that have so far been built are not, however, completely satisfactory from various points of view, in particular as regards simplicity of the structure, efficiency of the folding system, and overall dimensions of the bicycle in the folded condition. Known systems moreover frequently jeopardize the possibility of producing bicycles that in the condition of normal use have a styling, a weight, and levels of performance similar to those of a normal high-range bicycle, especially with reference to the drivetrain and to the size of the wheels.

### Object of the invention

Consequently, an object of the invention is to provide a folding bicycle of the type referred to above that will be simple and functional, will present a low weight, will have minimum overall dimensions in the folded condition, will afford simple folding operations via quick and safe locking-unlocking systems, and at the same time in its condition of normal use will be similar, both at the level of quality of design and as regards performance, to a high-range bicycle of the non-folding type.

A further object is to provide a bicycle of the type referred to above that will be suited to being implemented in particular in the form of bicycle with pedal assistance, provided with a pedal-assist electric motor.

### Summary of the invention

With a view to achieving the aforesaid objects, the subject of the present invention is a folding bicycle having the characteristics referred to at the start of the present description and moreover characterized in that the front-wheel support includes a second folding axis oriented in a direction transverse to the general plane of the bicycle that enables the front wheel to be moved from a position of normal use to a folded position in which the axis of the front wheel is closer to, or substantially coincident with, the axis of the rear wheel when the latter is in its folded position.

The second folding axis is defined by an articulated connection between a lower portion of said front-wheel support and an upper portion of said front-wheel support. The first folding axis of the frame is defined by an articulated connection between the rear end of said main diagonal element of the frame and a structure that includes said crank-axle unit and said rear-wheel support.

In the case where the bicycle is a bicycle with pedal assistance, said crank-axle unit includes an electric motor operatively connected to said chainwheel comprised in the crank-axle unit of the bicycle.

According to the invention, said rear-wheel support and said front-wheel support extend only on one and the same side of the bicycle in such a way that, in the folded condition about the first folding axis, said supports are on the outside of the ensemble of the two wheels arranged alongside one another.

Preferably, said frame includes a third folding axis oriented in a direction transverse to the general plane of the bicycle and defined by an articulated connection between the rear end of the main diagonal element of the frame and a seat tube of the bicycle, which carries a bicycle saddle, in such a way that the seat tube with the saddle carried thereby can be folded into a position in which it is adjacent to the main diagonal element of the frame.

According to a further preferred characteristic, the steering tube includes a fourth folding axis oriented in a direction transverse to the general plane of the bicycle and defined by an articulated connection between an upper portion of said steering tube and a lower portion of said steering tube that carries a bicycle handlebar in such a way that said upper portion of the steering tube, with the handlebar carried thereby, can be folded adjacent to said main diagonal element of the frame. Furthermore, said handlebar comprises two handlebar half-portions connected to said upper portion of the steering tube in a foldable manner.

The crank-axle unit includes a crank axle that carries two crank arms, each provided with a pedal articulated to the respective crank arm so that it can be folded, through a rotation of 180°, onto the inner side of the crank arm.

According to a further important characteristic of the present invention, each of the aforesaid folding axes is defined by an articulated connection between a first part and a second part and by the fact that associated to each articulated connection is a device for quick locking and unlocking of the articulated connection into/from a configuration of normal use, said locking and unlocking device comprising a cam member, which is rotatably mounted on one of the two parts of the articulated connection and can be displaced by means of an actuation lever, against the action of spring means, between a released, unlocking, position and a locking position, in which said cam member engages against a striker element carried by the other part of the articulated connection.

Thanks to the aforesaid characteristics, the bicycle according to the invention achieves the purposes that have been referred to above by means of a structure that is extremely simple and functional.

### Detailed description of a preferred embodiment

Further characteristics and advantages of the invention will emerge from the ensuing description with reference to the annexed drawings, which are provided purely by way of non-limiting example and in which:

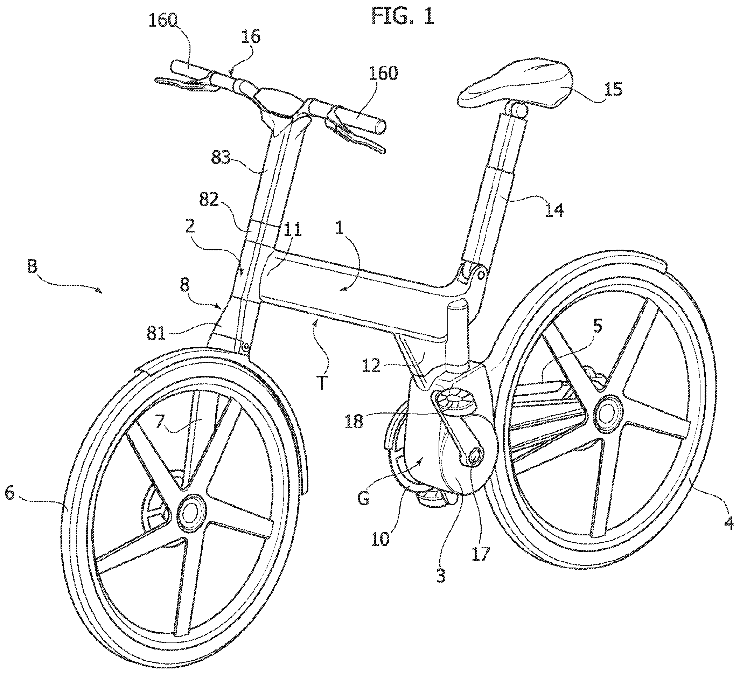

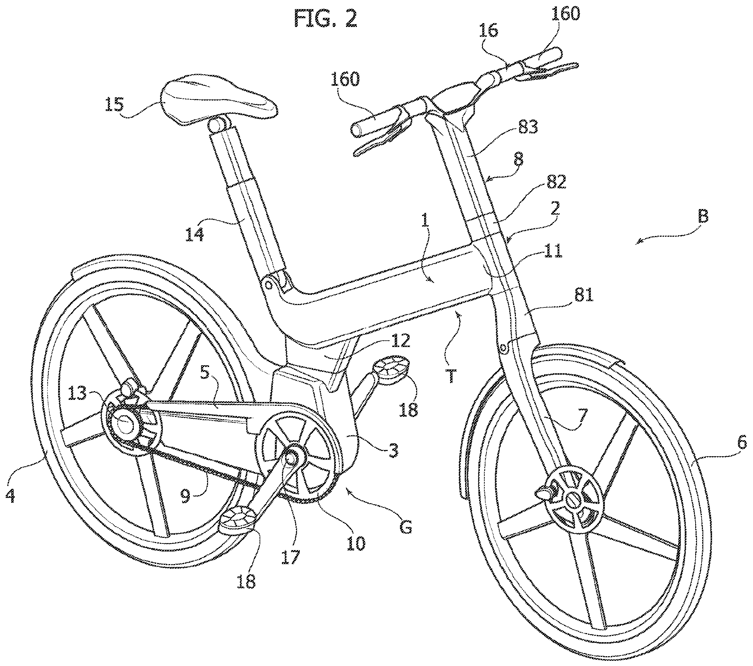

- Figures 1 and 2 are two perspective views of a preferred embodiment of the folding bicycle according to the present invention;
- Figures 3-6 illustrate the bicycle of the previous figures with the frame in different folded positions;
- Figure 7 is a perspective view of the bicycle in its completely folded configuration;
- Figure 8 is a cross-sectional view of a rear portion of the bicycle of the previous figures;
- Figure 9 illustrates the details of Figure 8 at an enlarged scale;
- Figures 10 and 11 are, respectively, an exploded perspective view and a side view of the components shown in Figures 8 and 9;
- Figure 12 is a perspective view of the bicycle of the previous figures, represented in which are the folding axes of the frame; and
- Figure 13 is a sectioned view of an example of articulated connection integrated in the frame of the bicycle represented in the previous figures.

In the annexed drawings, designated by the reference B is a preferred embodiment of a folding bicycle according to the present invention. The bicycle B has a frame T rotatably mounted on which are a front wheel 6 and a rear wheel 4. The rear wheel 4 is rotatably mounted on a rear-wheel support 5, which is connected to the frame T, and the front wheel 6 is rotatably mounted on a front-wheel support 7. The frame T comprises a main diagonal frame element 1, which has a front end 11 that carries a head tube 2 and a rear end 12 that carries a crank-axle unit G of the bicycle B.

According to a technique in itself known, the rear wheel 4 has a hub 23 that carries a sprocket wheel 13 connected by means of a chain drive 9 to a chainwheel 10 of the crank-axle unit G, whereas the front wheel 6 has its support 7 connected to a steering tube 8, which is rotatably mounted within the head tube 2. As an alternative to the embodiment illustrated in the annexed drawings, the chain drive 9 of the bicycle B can also be obtained by belt means instead of the chain.

In the preferred embodiment of the invention illustrated in the drawings, the folding bicycle B is a bicycle with pedal assistance, with its crank-axle unit G comprising an electric motor, which is operatively connected to the chainwheel 10 comprised in the crank-axle unit G. In the present description and in the annexed drawings, the constructional details regarding the electric motor are not presented since these details can be obtained in any known way and also in so far as elimination of these details from the drawings renders the latter more readily and easily understandable. On the other hand, the invention can be equally applied to a conventional bicycle without any electromechanical aid for the user of the bicycle.

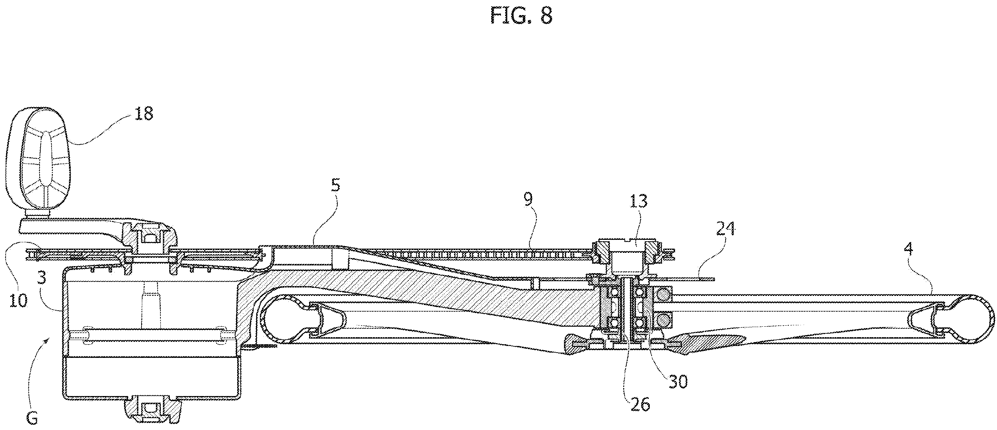

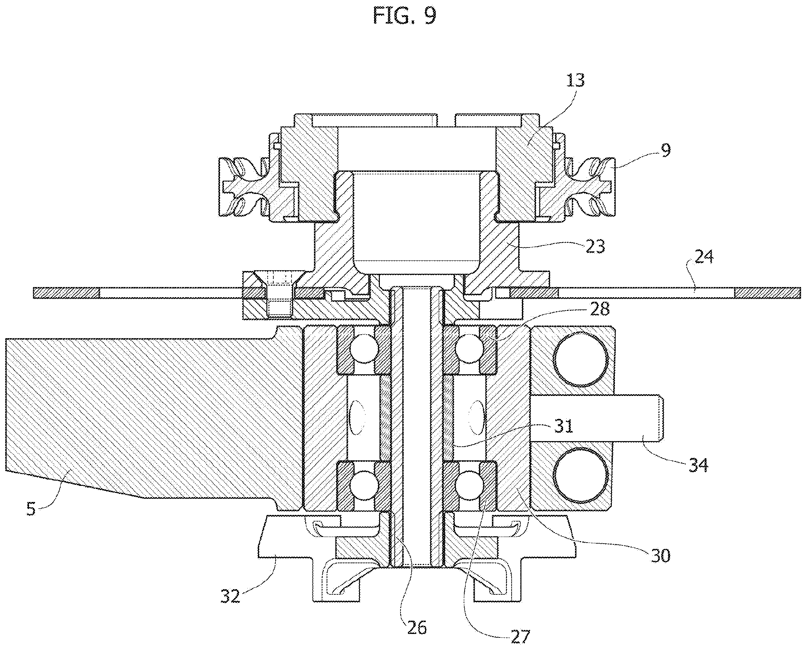

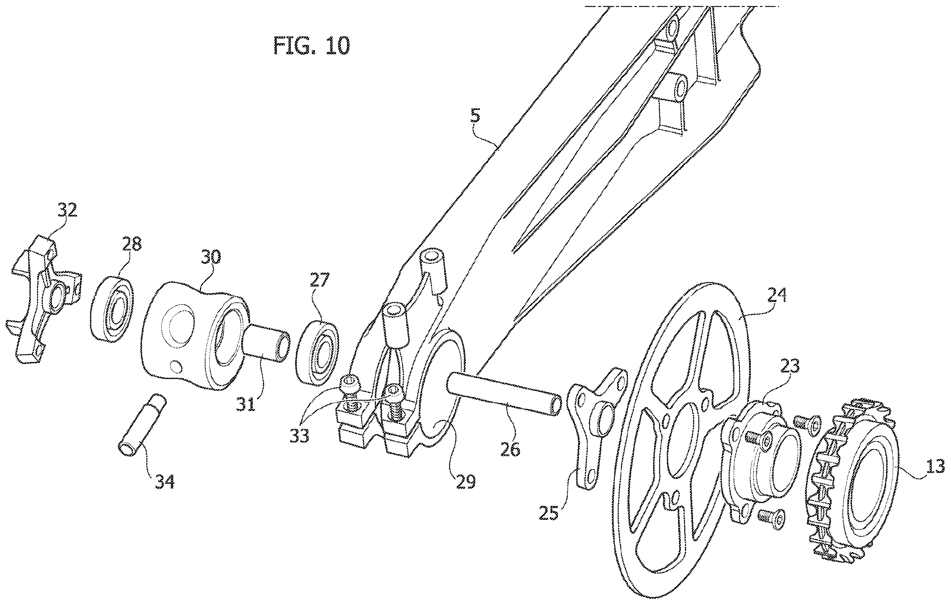

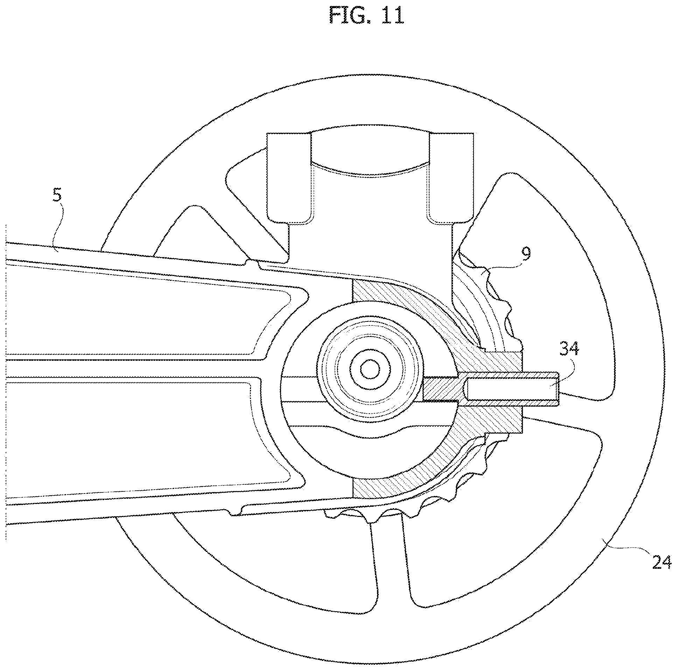

Further structural characteristics of the bicycle B regarding the rear wheel 4 and how it is engaged on the support 5 are illustrated in Figures 8-10. The rear wheel 4 is mounted at a rear portion of the support 5 having a perforated seat 29 mounted within which is a chain of elements. These elements, illustrated in particular in the exploded view of Figure 10, in the mounted condition are coaxial and engaged on a pin 26 provided within the seat 29. The hub 23 that carries the sprocket wheel 13 is screwed to a brake disk 24 and to a flange 25. In addition, once again with reference to Figure 10, mounted within the perforated seat 29 of the support 5 is a cylindrical member 30, which carries a pair of bearings 27, 28, which are provided with a spacer 31. Finally, at the opposite end of the sprocket wheel 13, the chain of elements described above terminates with a flange 32. In the mounted condition, the chain of elements described above is blocked at the rear portion of the support 5, by tightening of two screws 33. Furthermore, in particular with reference to the side view of Figure 11, engaged in the cylindrical member 30 is a lever 34, which is pre-arranged for adjusting the pull of the drive 9 by means of manual regulation performed by a user.

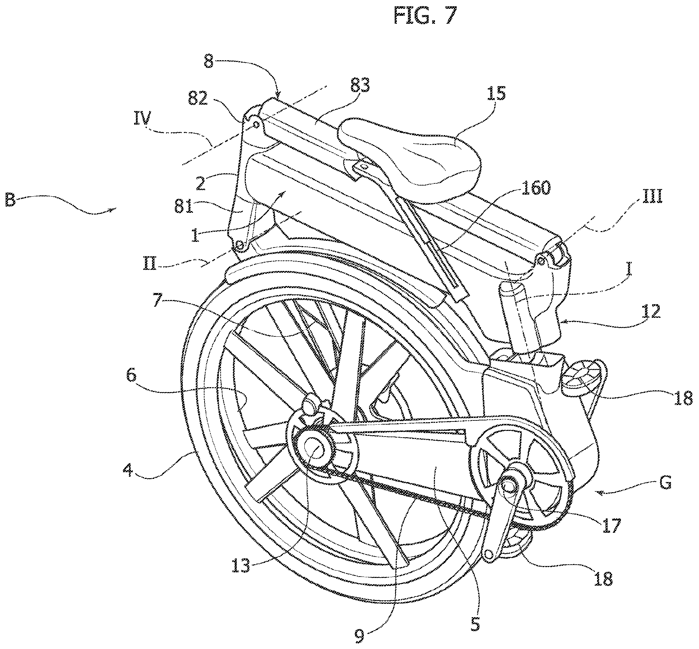

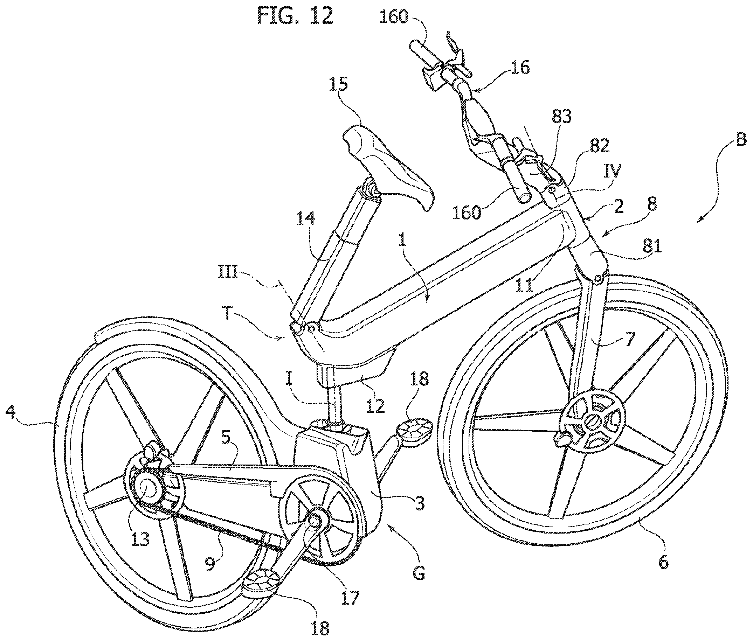

According to a fundamental characteristic of the invention, the folding bicycle B has a plurality of folding axes I, II, III, IV (Figure 12), which make it possible to displace portions of the bicycle B from a position of normal use to a folded position (Figure 7).

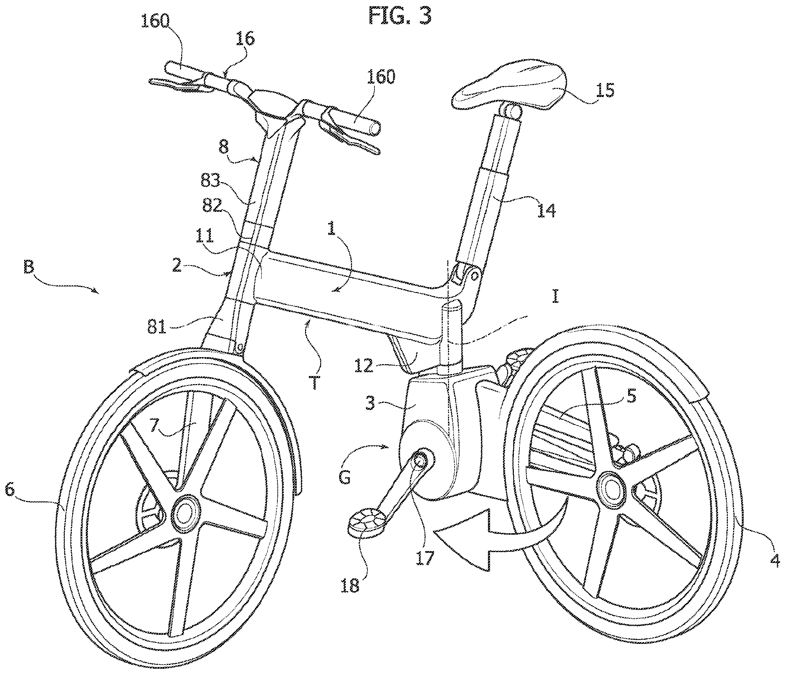

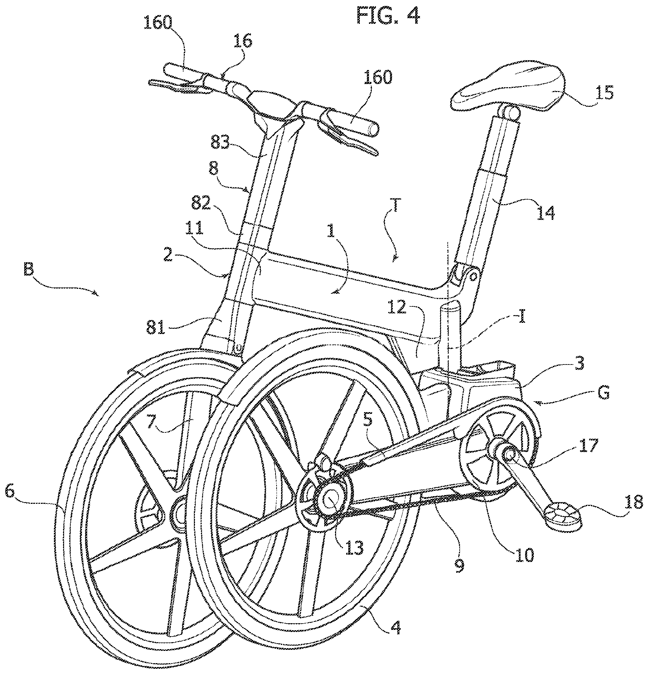

With reference in particular to Figures 3, 4, the frame T has a first, substantially vertical, folding axis I that enables the rear wheel 4 to be moved, together with its support 5 and the crank-axle unit G, via a rotation through 180°, from the position of normal use to a folded position in which the rear wheel 4 is substantially arranged alongside the front wheel 6. The first folding axis I of the frame T is defined by an articulated connection between the rear end 12 of said main diagonal element 1 of the frame T and a structure 3 that includes inside it the electric motor (Figures 3, 4).

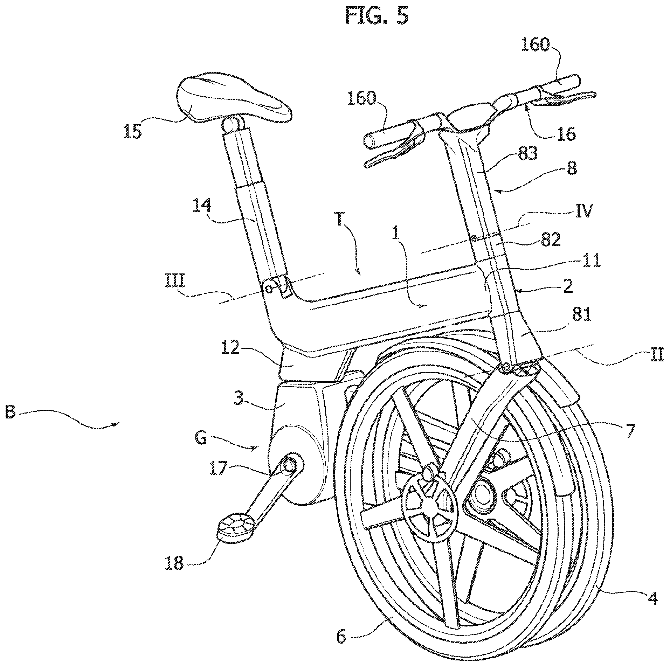

According to an important structural characteristic of the bicycle B, the rear-wheel support 5 and the front-wheel support 7 extend only on one and the same side of the bicycle B, in such a way that, in the folded condition about the first folding axis I, the supports 5, 7 are on the outside of the ensemble of the two wheels arranged alongside one another (Figures 4 and 5). This structural solution is particularly indicated to facilitate folding of the bicycle without jeopardizing the aesthetic appearance of the bicycle itself.

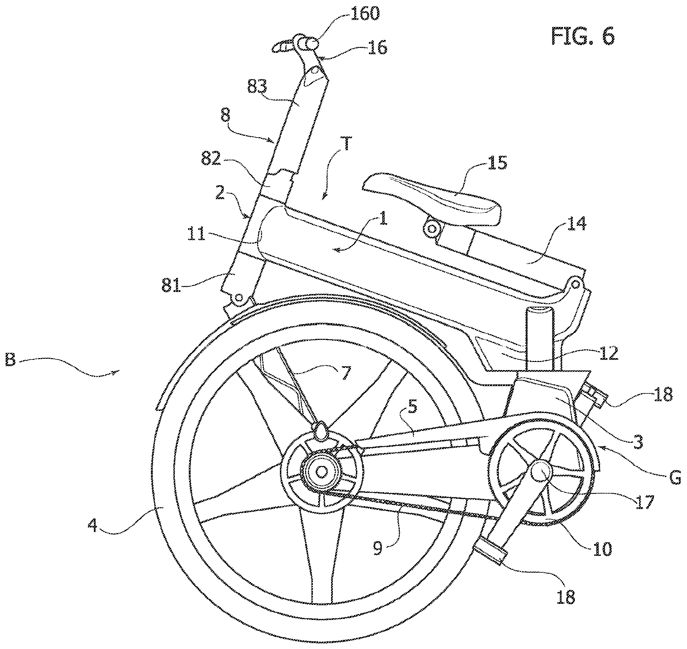

According to an essential characteristic of the invention, the front-wheel support 7 includes a second folding axis II. In particular, the second folding axis II is defined by an articulated connection between a lower portion 81 of the steering tube 8 and an upper portion of the front-wheel support 7 (Figures 5 and 6). The second axis II is oriented in a direction transverse to the general plane of the bicycle B and enables the front wheel 6 to be moved from a position of normal use to a folded position. As shown in Figures 5-7, in this folded position, the axis of the front wheel 6 is closer to, or substantially coincident with, the axis of the rear wheel 4 when the latter is in its folded position.

Thanks to the possibility of folding the frame T of the bicycle B both according to a movement about the first axis I and according to a movement about the second axis II, the overall dimensions of the bicycle in its folded configuration is very contained.

In order to reduce further the overall dimensions of the bicycle B in the folded configuration, the bicycle B has a third folding axis III (illustrated in Figures 5 and 12) oriented in a direction transverse to the general plane of the bicycle B. This third folding axis III is defined by an articulated connection between the rear end 12 of the main diagonal element 1 of the frame T and a seat tube 14 of the bicycle B, which carries a bicycle saddle 15, in such a way that the seat tube 14 with the saddle 15 carried thereby can be folded into a position in which it is adjacent to the main diagonal element 1 of the frame.

Moreover, according to a further preferred characteristic of the invention illustrated in Figures 5 and 12, the steering tube 8 includes a fourth folding axis IV oriented in a direction transverse to the general plane of the bicycle B, which is defined by an articulated connection between an intermediate portion 82 of the steering tube 8 and an upper portion 83 of the steering tube 8, which carries a bicycle handlebar 16. Consequently, the upper portion 83 of the steering tube 8, with the handlebar 16 carried thereby, can be folded adjacent to the main diagonal element 1 of the frame.

According to further preferred characteristics of the invention, once again in order to reduce the overall dimensions of the bicycle when it is folded, the handlebar 16 comprises two handlebar half-portions 160 connected to the upper portion 83 of the steering tube 8 in a foldable manner (Figure 7), and moreover the crank-axle unit G includes a crank axle, which carries two crank arms, each provided with a pedal 18 articulated to the respective crank arm so that it can be folded, through a rotation of 180°, onto the inner side of the crank arm.

Thanks to the possibility of folding the frame T according to the axes I, II, III, IV described above, the two handlebar half-portions 160 and the pedals 18, the completely folded configuration of the bicycle illustrated in Figure 7 presents particularly limited overall dimensions, enabling easy transportation of the bicycle B by a user.

Each of the aforesaid folding axes I, II, III, IV is defined by an articulated connection between a first part and a second part of the frame T. Associated to each articulated connection is a device for quick locking and unlocking of the articulated connection. The locking and unlocking devices include respective actuation levers (not illustrated in the drawings that show the bicycle B), which can be operated by the user.

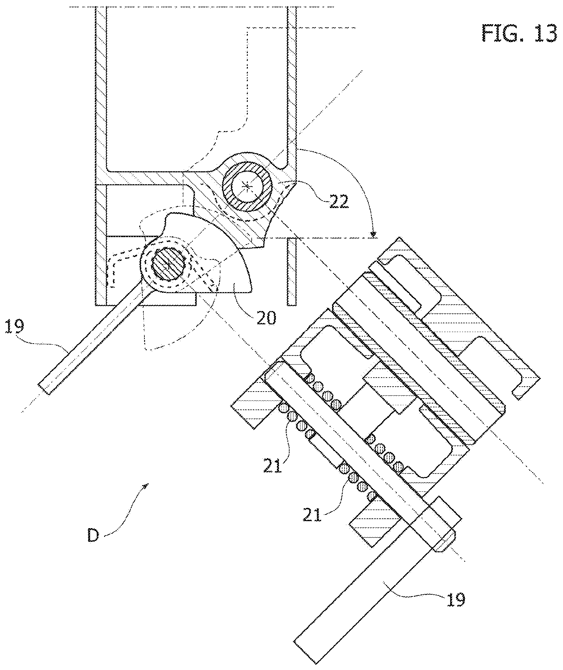

With particular reference to Figure 13, which is a sectioned view of a locking and unlocking device D, a cam member 20 is rotatably mounted on one of the two parts of the articulated connection and can be displaced by means of an actuation lever 19, against the action of spring means 21, between a released, unlocking, position and a locking position, in which the cam member 20 engages against a striker element 22 carried by the other part of the articulated connection.

Thanks to the characteristics described above, the folding bicycle according to the present invention can be implemented in particular in the form of simple bicycle with pedal assistance, at the same time being functional and having a low weight and minimum overall dimensions in the folded condition. At the same time, the bicycle in its condition of normal use is similar, both at the level of design quality and as regards performance, to a high-range bicycle of the non-folding type.

Of course, without prejudice to the principle of the invention, the details of construction and the embodiments may vary widely with respect to what has been described and illustrated herein purely by way of example, without thereby departing from the scope of the present invention.

## Claims

1. A folding bicycle (B), comprising:
- a frame (T), including a main diagonal element (1) having a front end (11) which carries a head tube (2) and a rear end (12) which carries a crank-axle unit (G) of the bicycle (B);
- a rear wheel (4) rotatably mounted on a rear-wheel support (5) connected to said frame (T), said rear wheel (4) having a hub that carries a sprocket wheel (13) connected by means of a chain drive (9) or a belt drive to a chainwheel (10) of said crank-axle unit (G); and
- a front wheel (6) rotatably mounted on a front-wheel support (7) connected to a steering tube (8), which is rotatably mounted within said head tube (2),
- wherein said frame (T) has at least one first, substantially vertical, folding axis (I) that enables the rear wheel (4) to be moved, together with the rear-wheel support (5) and the crank-axle unit (G), via a rotation of approximately 180°, from a position of normal use to a folded position in which the rear wheel (4) is substantially arranged alongside the front wheel (6),
- wherein the front-wheel support (7) includes a second folding axis (II) oriented in a direction transverse to the general plane of the bicycle (B), which enables the front wheel (6) to be moved from a position of normal use to a folded position in which the axis of the front wheel (6) is closer to, or substantially coincident with, the axis of the rear wheel (4) when the latter is in its folded position,
- wherein said rear-wheel support (5) and said front-wheel support (7) extend only on one and the same side of the bicycle (B), in such a way that in the folded condition about said first folding axis (I), said supports (5, 7) are on the outside of the ensemble of the two wheels (4, 6) arranged alongside one another.

2. The folding bicycle according to claim 1, **characterized in that** said second folding axis (II) is defined by an articulated connection between a lower portion (81) of said steering tube (8) and an upper portion of said front-wheel support (7).

3. The folding bicycle according to claim 1, **characterized in that** said first folding axis (I) of the frame (T) is defined by an articulated connection between the rear end (12) of said main diagonal element (1) of the frame and a structure (3) that includes said crank-axle unit (G) and said rear-wheel support (5).

4. The folding bicycle according to claim 1, wherein said bicycle (B) is a bicycle with pedal assistance, **characterized in that** said crank-axle unit (G) includes an electric motor operatively connected to said chainwheel (10) comprised in the crank-axle unit of the bicycle (B).

5. The folding bicycle according to claim 1, **characterized in that** said frame (T) includes a third folding axis (III) oriented in a direction transverse to the general plane of the bicycle (B) and defined by an articulated connection between the rear end (12) of said main diagonal element (1) of the frame (T) and a seat tube (14) of the bicycle (B), which carries a bicycle saddle (15), in such a way that said seat tube (14) with the saddle (15) is foldable into a position in which it is adjacent to said main diagonal element (1) of the frame (T).

6. The folding bicycle according to claim 1, **characterized in that** said steering tube (8) includes a fourth folding axis (IV), which is oriented in a direction transverse to the general plane of the bicycle and is defined by an articulated connection between an intermediate portion (82) of said steering tube (8) and an upper portion (83) of said steering tube (8), which carries a bicycle handlebar (16), in such a way that said upper portion (83) of the steering tube (8), with the handlebar (16) carried thereby, is foldable into a position in which it is adjacent to said main diagonal element (1) of the frame.

7. The folding bicycle according to claim 6, **characterized in that** said handlebar (16) comprises two handlebar half-portions (160) connected to said upper portion (83) of the steering tube (8) in a foldable manner.

8. The folding bicycle according to claim 1, **characterized in that** said crank-axle unit (G) includes a crank axle (17), which carries two crank arms (18), each of which is provided with a pedal articulated to the respective crank arm so as to be foldable, via a rotation through 180°, onto the inner side of the crank arm (18).

9. The folding bicycle according to any one of the preceding claims, **characterized in that** each of said folding axes (I, II, III, IV) is defined by an articulated connection between a first part and a second part and **in that** associated to each articulated connection is a device for quick locking and unlocking (D) of the articulated connection into/from a configuration of normal use, said locking and unlocking device (D) comprising a cam member (20), rotatably mounted on one of the two parts of the articulated connection and movable by means of an actuation lever (19), against the action of spring means (21), between a released, unlocking, position and a locking position, in which said cam member (20) engages against a striker element (22) carried by the other part of the articulated connection.

## Patentansprüche

1. Klappfahrrad (B), umfassend:
- einen Rahmen (T), der ein diagonales Hauptelement (1) einschließt, das ein vorderes Ende (11), das ein Steuerrohr (2) trägt, und ein hinteres Ende (12) aufweist, das eine Kurbelachseneinheit (G) des Fahrrads (B) trägt;
- ein Hinterrad (4), das drehbar auf einer Hinterradstütze (5) montiert ist, die mit dem Rahmen (T) verbunden ist, wobei das Hinterrad (4) eine Nabe aufweist, die einen Zahnkranz (13) trägt, der mittels eines Kettenantriebs (9) oder eines Riemenantriebs mit einem Kettenrad (10) der Kurbelachseneinheit (G) verbunden ist; und
- ein Vorderrad (6), das drehbar an einer Vorderradstütze (7) montiert ist, die mit einem Lenkrohr (8) verbunden ist, das innerhalb des Steuerrohrs (2) drehbar montiert ist,
- wobei der Rahmen (T) mindestens eine erste, im Wesentlichen vertikale Faltachse (I) aufweist, die es ermöglicht, das Hinterrad (4) zusammen mit der Hinterradstütze (5) und der Kurbelachseneinheit (G) durch eine Drehung um etwa 180° aus einer Position des normalen Gebrauchs in eine gefaltete Position zu bewegen, in der das Hinterrad (4) im Wesentlichen neben dem Vorderrad (6) angeordnet ist,
- wobei die Vorderradstütze (7) eine zweite Faltachse (II) einschließt, die in einer Richtung quer zur allgemeinen Ebene des Fahrrads (B) orientiert ist, die es ermöglicht, das Vorderrad (6) aus einer Position des normalen Gebrauchs in eine gefaltete Position zu bringen, in der die Achse des Vorderrads (6) näher an der Achse des Hinterrads (4) ist oder im Wesentlichen mit dieser zusammenfällt, wenn sich letzteres in seiner gefalteten Position befindet,
- wobei sich die Hinterradstütze (5) und die Vorderradstütze (7) nur auf ein und derselben Seite des Fahrrads (B) erstrecken, so dass sich die Stützen (5, 7) im gefalteten Zustand um die erste Faltachse (I) auf der Außenseite des Ensembles der beiden nebeneinander angeordneten Räder (4, 6) sind.

2. Klappfahrrad nach Anspruch 1, **dadurch gekennzeichnet, dass** die zweite Faltachse (II) durch eine gelenkige Verbindung zwischen einem unteren Abschnitt (81) des Lenkrohrs (8) und einem oberen Abschnitt der Vorderradstütze (7) definiert ist.

3. Klappfahrrad nach Anspruch 1, **dadurch gekennzeichnet, dass** die erste Faltachse (I) des Rahmens (T) durch eine gelenkige Verbindung zwischen dem hinteren Ende (12) des diagonalen Hauptelements (1) des Rahmens und einer Struktur (3) definiert ist, die die Kurbelachseneinheit (G) und die Hinterradstütze (5) einschließt.

4. Klappfahrrad nach Anspruch 1, wobei das Fahrrad (B) ein Fahrrad mit Pedalunterstützung ist, **dadurch gekennzeichnet, dass** die Kurbelachseneinheit (G) einen Elektromotor einschließt, der operativ mit dem Kettenrad (10) verbunden ist, das in der Kurbelachseneinheit des Fahrrads (B) enthalten ist.

5. Klappfahrrad nach Anspruch 1, **dadurch gekennzeichnet, dass** der Rahmen (T) eine dritte Faltachse (III) einschließt, die in einer Richtung quer zur allgemeinen Ebene des Fahrrads (B) orientiert ist und durch eine gelenkige Verbindung zwischen dem hinteren Ende (12) des diagonalen Hauptelements (1) des Rahmens (T) und einem Sitzrohr (14) des Fahrrads (B) definiert ist, das einen Fahrradsattel (15) trägt, so dass das Sitzrohr (14) mit dem Sattel (15) in eine Position faltbar ist, in der es an das diagonale Hauptelement (1) des Rahmens (T) angrenzt.

6. Klappfahrrad nach Anspruch 1, **dadurch gekennzeichnet, dass** das Lenkrohr (8) eine vierte Faltachse (IV) einschließt, die in einer Richtung quer zur allgemeinen Ebene des Fahrrads orientiert ist und durch eine gelenkige Verbindung zwischen einem Zwischenabschnitt (82) des Lenkrohrs (8) und einem oberen Abschnitt (83) des Lenkrohrs (8) definiert ist, der eine Fahrradlenkstange (16) trägt, so dass der obere Abschnitt (83) des Lenkrohrs (8), mit der durch diesen getragenen Lenkstange (16), in eine Position faltbar ist, in der er an das diagonale Hauptelement (1) des Rahmens angrenzt.

7. Klappfahrrad nach Anspruch 6, **dadurch gekennzeichnet, dass** die Lenkstange (16) zwei Lenkstangenhalbabschnitte (160) umfasst, die mit dem oberen Abschnitt (83) des Lenkrohrs (8) in einer faltbaren Weise verbunden sind.

8. Klappfahrrad nach Anspruch 1, **dadurch gekennzeichnet, dass** die Kurbelachseneinheit (G) eine Kurbelachse (17) einschließt, die zwei Kurbelarme (18) trägt, von denen jeder mit einem Pedal bereitgestellt ist, das an dem jeweiligen Kurbelarm angelenkt ist, so dass es durch eine Drehung um 180° auf die innere Seite des Kurbelarms (18) faltbar ist.

9. Klappfahrrad nach einem der vorstehenden Ansprüche, **dadurch gekennzeichnet, dass** jede der Faltachsen (I, **II,** III, IV) durch eine gelenkige Verbindung zwischen einem ersten Teil und einem zweiten Teil definiert ist und dadurch, dass jeder gelenkigen Verbindung eine Vorrichtung zum schnellen Verriegeln und Entriegeln (D) der gelenkigen Verbindung in/aus einer Konfiguration des normalen Gebrauchs assoziiert ist, wobei die Verriegelungs- und Entriegelungsvorrichtung (D) ein Nockenelement (20) umfasst, das drehbar an einem der zwei Teile der gelenkigen Verbindung montiert ist und mittels eines Betätigungshebels (19) gegen die Wirkung von Federmitteln (21) zwischen einer gelösten, entriegelten Position und einer Verriegelungsposition bewegt werden kann, in der das Nockenelement (20) an einem Anschlagelement (22) angreift, das von dem anderen Teil der gelenkigen Verbindung getragen wird.

## Revendications

1. Bicyclette pliable (B), comprenant :
- un cadre (T), incluant un élément diagonal principal (1) présentant une extrémité avant (11) qui porte un tube (2) de direction et une extrémité arrière (12) qui porte une unité (G) d'axe de pédalier de la bicyclette (B) ;
- une roue arrière (4) montée en rotation sur un support (5) de roue arrière relié audit cadre (T), ladite roue arrière (4) présentant un moyeu qui porte un pignon (13) relié au moyen d'une transmission par chaîne (9) ou d'une transmission par courroie à un plateau (10) de pédalier de ladite unité (G) d'axe de pédalier ; et
- une roue avant (6) montée en rotation sur un support (7) de roue avant relié à un tube pivot (8), qui est monté en rotation à l'intérieur dudit tube (2) de direction,
- dans laquelle ledit cadre (T) présente au moins un premier axe (I) de pliage sensiblement vertical qui permet de déplacer la roue arrière (4), conjointement avec le support (5) de roue arrière et l'unité (G) d'axe de pédalier, par le bais d'une rotation d'environ 180°, d'une position d'utilisation normale à une position repliée dans laquelle la roue arrière (4) est sensiblement agencée le long de la roue avant (6),
- dans laquelle le support (7) de roue avant inclut un deuxième axe (II) de pliage orienté dans une direction transversale au plan général de la bicyclette (B), qui permet de déplacer la roue avant (6) d'une position d'utilisation normale à une position repliée dans laquelle l'axe de la roue avant (6) est plus proche de, ou sensiblement coïncide avec, l'axe de la roue arrière (4) lorsque cette dernière est en position repliée,
- dans laquelle ledit support (5) de roue arrière et ledit support (7) de roue avant ne s'étendent que d'un seul et même côté de la bicyclette (B), de sorte que dans l'état replié autour dudit premier axe (I) de pliage, lesdits supports (5, 7) sont à l'extérieur de l'ensemble des deux roues (4, 6) agencées l'une à côté de l'autre.

2. Bicyclette pliable selon la revendication 1, **caractérisée en ce que** ledit deuxième axe (II) de pliage est défini par une liaison articulée entre une partie inférieure (81) dudit tube pivot (8) et une partie supérieure dudit support (7) de roue avant.

3. Bicyclette pliable selon la revendication 1, **caractérisée en ce que** ledit premier axe (I) de pliage du cadre (T) est défini par une liaison articulée entre l'extrémité arrière (12) dudit élément diagonal principal (1) du cadre et une structure (3) qui inclut ladite unité (G) d'axe de pédalier et ledit support (5) de roue arrière.

4. Bicyclette pliable selon la revendication 1, dans laquelle ladite bicyclette (B) est une bicyclette à assistance de pédale, **caractérisée en ce que** ladite unité (G) d'axe de pédalier inclut un moteur électrique relié de manière opérationnelle audit plateau (10) de pédalier compris dans l'unité d'axe de pédalier de la bicyclette (B).

5. Bicyclette pliable selon la revendication 1, **caractérisée en ce que** ledit cadre (T) inclut un troisième axe (III) de pliage orienté dans une direction transversale au plan général de la bicyclette (B) et défini par une liaison articulée entre l'extrémité arrière (12) dudit élément diagonal principal (1) du cadre (T) et un tube (14) de selle de la bicyclette (B), qui porte une selle (15) de bicyclette, de sorte que ledit tube (14) de selle avec la selle (15) soit pliable dans une position dans laquelle il est adjacent audit élément diagonal principal (1) du cadre (T).

6. Bicyclette pliable selon la revendication 1, **caractérisée en ce que** ledit tube pivot (8) inclut un quatrième axe (IV) de pliage, qui est orienté dans une direction transversale au plan général de la bicyclette et est défini par une liaison articulée entre une partie intermédiaire (82) dudit tube pivot (8) et une partie supérieure (83) dudit tube pivot (8), qui porte un guidon (16) de bicyclette, de sorte que ladite partie supérieure (83) du tube pivot (8), avec le guidon (16) porté ainsi, est pliable dans une position dans laquelle elle est adjacente audit élément diagonal principal (1) du cadre.

7. Bicyclette pliable selon la revendication 6, **caractérisée en ce que** ledit guidon (16) comprend deux demi-parties (160) de guidon reliées à ladite partie supérieure (83) du tube pivot (8) de manière pliable.

8. Bicyclette pliable selon la revendication 1, **caractérisée en ce que** ladite unité (G) d'axe de pédalier inclut un axe (17) de pédalier, qui porte deux manivelles (18) de pédalier, chacune étant dotée d'une pédale articulée par rapport à la manivelle de pédalier respective de manière à être pliable, par une rotation à 180°, sur le côté interne de la manivelle (18) de pédalier.

9. Bicyclette pliable selon l'une quelconque des revendications précédentes, **caractérisée en ce que** chacun desdits axes (I, **II,** III, IV) de pliage est défini par une liaison articulée entre une première partie et une seconde partie et **en ce qu'**un dispositif (D) de verrouillage et de déverrouillage rapides de la liaison articulée dans/depuis une configuration d'utilisation normale est associé à chaque liaison articulée, ledit dispositif (D) de verrouillage et de déverrouillage comprenant un élément (20) came, monté en rotation sur l'une des deux parties de la liaison articulée et mobile au moyen d'un levier (19) d'actionnement, contre l'action de moyens (21) à ressort, entre une position libérée de déverrouillage et une position de verrouillage, dans laquelle ledit élément (20) came vient en prise contre un élément (22) gâche porté par l'autre partie de la liaison articulée.
